# EUROPÄISCHE PATENTSCHRIFT

(11) **EP 2 695 109 B1**
(45) Veröffentlichungstag und Bekanntmachung des Hinweises auf die Patenterteilung: **25.05.2016**
(21) Anmeldenummer: 12712603.5
(22) Anmeldetag: 15.03.2012
(51) Int. Cl.: G06K 19/077

(54) **HALBZEUG ZUR HERSTELLUNG EINES CHIPKARTENINLAYS, VERFAHREN ZUR HERSTELLUNG DES HALBZEUGES SOWIE VERFAHREN ZUR HERSTELLUNG EINER CHIPKARTE**
SEMIFINISHED PRODUCT FOR PRODUCING A SMART CARD MODULE, METHOD FOR PRODUCING THE SEMIFINISHED PRODUCT AND METHOD FOR PRODUCING A SMART CARD
SEMI-PRODUIT POUR LA FABRICATION D'UN MODULE DE CARTE À PUCE, PROCÉDÉ DE FABRICATION DU SEMI-PRODUIT AINSI QUE PROCÉDÉ DE FABRICATION D'UNE CARTE À PUCE

(30) Priorität: 01.04.2011 DE 102011001722
(43) Veröffentlichungstag der Anmeldung: 12.02.2014
(73) Patentinhaber: Bundesdruckerei GmbH, 10969 Berlin (DE)
(72) Erfinder: MUTH, Oliver, 12277 Berlin (DE); KLOESER, Joachim, 10779 Berlin (DE); FERBER, Alexander, 12105 Berlin (DE); DONATH, Denis, 16348 Wandlitz (DE)
(74) Vertreter: Mammel und Maser
(86) Internationale Anmeldenummer: PCT/EP2012/054569
(87) Internationale Veröffentlichungsnummer: WO 2012/130623

(56) Entgegenhaltungen:
- DE-A1-102009 032 678

## Beschreibung

Die Erfindung betrifft ein Halbzeug zur Herstellung einer Chipkarte sowie ein Verfahren zur Herstellung des Halbzeugs für eine Chipkarte als auch ein Verfahren zur Herstellung einer Chipkarte mit einem solchen Halbzeug.

Aus der DE 699 29 981 T2 geht ein Verfahren zur Herstellung einer kontaktlosen Chipkarte hervor, welches in einer ersten Phase des Herstellungsverfahrens darin besteht, eine Folie bereitzustellen, die zumindest ein wärmeaktivierbares Klebematerial umfasst und deren Fläche mindestens gleich der Fläche der herzustellenden Karte ist. Eine elektronische Einheit wird auf die Oberfläche dieser Folie aus wärmeaktivem Klebematerial gelegt. Eine weitere Folie wird anschließend auf diese Fläche heiß laminiert, um die elektronische Einheit zumindest teilweise in dieses wärmeaktivierende Material zu versenken. Nach diesem ersten Laminiervorgang folgt zumindest in einer letzten Phase des Herstellungsverfahrens eine weitere Heißlamination, um die den Körper der Karte bildenden Schichten untrennbar miteinander zu verbinden. Dabei werden Folien aus wärmeaktivierbarem Klebematerial eingesetzt, welche insbesondere aus PE, PU oder PP bestehen. Die Trägerfolien, welche jeweils eine äußere Schicht bilden und dazwischen liegend die elektronische Einheit umgeben, bestehen aus PVC, PC oder PET.

Aufgrund der mindestens zweimaligen Lamination von Folien und Trägerschichten während der Herstellung einer solchen Chipkarte wird insbesondere das Trägermaterial aus Polycarbonat thermisch stark belastet. Dies kann zur Vorschädigungen und zur Reduzierung der Lebensdauer führen. Darüber hinaus ist eine Vielzahl von Prozessschritten erforderlich, die die Produktionskosten erhöhen.

Aus der DE 10 2009 032 678 A1 ist ein Verfahren zur Herstellung eines Inlays für einen Folienverbund bekannt, bei welchem auf einem Substrat mehrere Nutzen aufgebracht sind, welche aus einer Antenne und einem Mikrochip bestehen. Diesem Substrat wird eine Ausgleichsfolie zugeführt, in welche Aussparungen eingebracht sind, die in Abhängigkeit der jeweiligen Position des Mikrochips auf dem Substrat angepasst sind. Nach dem Zusammenführen der Ausgleichslage und dem Substrat werden die Ausgleichslage und das Substrat mit einer Hefteinrichtung punktuell zueinander fixiert, wobei geheftete Inlays hergestellt werden.

Anspruch 1 ist gegenüber diesem Dokument abgegrenzt. Die Erfindung ist Gegenstand der unabhängigen Ansprüche.

Der Erfindung liegt deshalb die Aufgabe zugrunde, ein Halbzeug zur Herstellung einer Chipkarte sowie ein Verfahren zu dessen Herstellung und ein Verfahren zur Herstellung einer Chipkarte mit einem solchen Halbzeug vorzuschlagen, bei welchem eine minimale thermische Belastung auf die verwendeten Materialien während den einzelnen Prozessschritten gegeben ist.

Diese Aufgabe wird erfindungsgemäß durch ein Halbzeug zur Herstellung einer Chipkarte gelöst, bei dem das Substrat und die Ausgleichslage durch eine Heftung miteinander verbunden sind, welche zumindest zwei das Substrat und die Ausgleichslage miteinander verbindenden Heftstellen umfasst, die entfernt von der Mehrzahl der Nutzen vorgesehen sind, wobei die Heftstellen zwischen einer zum Rand des Substrats angrenzenden Spalte von Nutzen und dem Rand des Substrats eingebracht sind. Aufgrund der Verbindung der Ausgleichslage mit dem Substrat durch eine solche Positionierung der Heftstellen entfernt von dem jeweiligen Nutzen erfolgt keine thermische und/oder mechanische Belastung der Nutzen. Dadurch können Vorbeschädigungen bei diesem Prozessschritt vermieden werden. Gleichzeitig erfolgt eine Vorfixierung der Ausgleichslage zum Substrat, ohne dass eine vollflächige Lamination hergestellt wird. Diese exakte passergenaue Positionierung der Ausgleichslage zum Mikrochip beziehungsweise zum Substrat bleibt dennoch bis zur Endverarbeitung des Halbzeugs aufrechterhalten. Des Weiteren ist nicht nur eine einfache Einbringung der Heftung im äußeresten Randbereich ermöglicht, sondern auch in einem solchen Bereich, der anschließend nach dem Ausstanzen eines Halbzeuges als Abfallprodukt entfernt wird. Darüber hinaus genügen sehr wenige Heftstellen im äußersten Randbereich eines Bogens oder einer Bahnware, um eine passergenaue Ausrichtung der Aussparung in der Ausgleichslage zum Mikrochip des Nutzens aufrechtzuerhalten.

In einer alternativen Ausführungsform ist vorgesehen, dass die Heftstellen zwischen dem Substrat und der Ausgleichslage einen Flächenbereich umfassen, der weniger als 30 %, insbesondere weniger als 20 % und bevorzugt weniger als 10 %, des von der Antenne umfassten Flächenbereiches zwischen der Ausgleichslage und dem Substrat beträgt. Dadurch wird die thermische und/oder mechanische Belastung einer Verbindung des Substrates und der Ausgleichslage auf ein Minimum in der räumlichen Größe und/oder den thermischen Eintrag reduziert.

Das Halbzeug umfasst vorteilhafterweise einen Mikrochip mit einem Display. Alternativ kann auch ein Mikrochip ohne Display eingesetzt werden. Der Mikrochip umfasst wenigstens einen Speicher und/oder einen Cryptoprozessor-Chip mit vorzugsweise einem abgestimmten Layout, das heißt, dass dieser Chip auf die Anzahl der Windungen angepasst ist.

Zur Reduzierung der Schichtdicke des Halbzeuges ist der Mikrochip bevorzugt als gedünnter und/oder ungehauster und/oder flexibler Mikrochip ausgebildet. Dadurch kann zusammen mit den weiteren Schichten ein Halbzeug erzielt werden, welches eine Schichtdicke von beispielsweise 150 µm aufweist.

Das Substrat und/oder die Ausgleichslage sind bevorzugt aus PC (Polycarbonat), PVC (Polyvinylchlorid), ABS (Acrylnitril-Butadien-Styrol) oder PET (Polyethylenterephthalat) hergestellt. Diese Schichten eignen sich besonders für Halbzeuge mit einer hohen Lebensdauer.

Des Weiteren ist bevorzugt vorgesehen, dass zwischen zwei auf dem Substrat befestigten Anschlussenden der Antenne, die der Aussparung der Ausgleichslage zugeordnet sind, zumindest eine Windung der Antenne hindurchgeführt sowie der Mikrochip als Brücke über die zumindest eine zwischen den Anschlussenden hindurchgeführte Windung positioniert und mit den Anschlussenden kontaktiert ist. Dadurch kann eine vereinfachte und kostengünstige Herstellung des Halbzeuges ermöglicht sein, da das zusätzliche Aufbringen von Isolierschichten auf die zumindest eine Windung zur anschließenden Positionierung des Mikrochips entfällt.

Die der Erfindung zugrunde liegende Aufgabe wird des Weiteren durch ein Verfahren zur Herstellung eines Halbzeuges für Chipkarten gelöst, bei welchen auf einem Substrat wenigstens eine Antenne und darauffolgend wenigstens ein IC-Chip, der mit der Antenne kommuniziert, zur Bildung eines Nutzens auf das Substrat aufgebracht wird, wobei eine Mehrzahl von Nutzen auf dem Substrat gebildet werden, und anschließend eine Ausgleichslage mit jeweils einer Aussparung zum jeweiligen IC-Chip positioniert und auf das Substrat aufgebracht sowie die Ausgleichslage mit dem Substrat durch eine Heftung verbunden werden, wobei die Heftung wenigstens zwei Heftstellen umfasst, die entfernt von der Mehrzahl der Nutzen positioniert und die Heftstellen zwischen einer zum Rand des Substrats angrenzenden Spalte von Nutzen und dem Rand des Substrats eingebracht werden. Die Herstellung eines solchen Halbzeuges kann somit ohne eine Lamination der Schichten in einfacher Weise erfolgen. Dadurch entstehen geringe Herstellungskosten. Des Weiteren ist bei einem Layoutwechsel bezüglich dem Mikrochip und der Antenne, insbesondere beim Mikrochip mit Display, eine einfache Adaption möglich. Darüber hinaus finden durch die Heftung minimale thermische und mechanische Belastungen statt, die insbesondere durch die bevorzugte Positionierung der einzelnen Heftstellen und entfernt von den Funktionsbauteilen erzielt werden.

Eine vorteilhafte Ausgestaltung des Verfahrens sieht vor, dass die Ausgleichslage und das Substrat durch eine punktförmige, linienförmige oder streifenförmige Heftung miteinander verbunden werden. Somit kann eine lokale Heftung an vordefinierten Punkten oder Bereichen erfolgen, um eine exakte Ausrichtung der Ausgleichslage zum Substrat aufrechtzuerhalten.

Die Heftstellen zwischen dem Substrat und der Ausgleichslage werden bevorzugt durch Löten, Schweißen, Ultraschall oder Kleben hergestellt, wobei insbesondere ein Heißkleben vorgesehen sein kann. Ebenso kann ein Verbinden der beiden Lagen mittels eines wärmereaktiven Klebemittels oder durch eine Laserbearbeitung erfolgen.

Zur Herstellung der Antenne auf dem Substrat wird bevorzugt eine leitfähige Paste verwendet, welche mittels Siebdruck aufgebracht wird. Alternativ kann zur Herstellung einer Antenne eine nass-chemische Behandlung vorgesehen sein, beispielsweise eine außenstromlose Abscheidung einer Metalllage, um einen geringen Antennenwiderstand oder alternativ eine galvanisch hergestellte Antenne zu erzielen.

Des Weiteren kann eine Antennenfolie bevorzugt auf das Substrat aufgebracht und durch eine Heftung mit dem Substrat verbunden werden. Dadurch wird eine Positionierung und Fixierung der Antennenfolie zum Substrat erzielt. Anschließend kann die Ausgleichslage aufgebracht werden, wobei zuvor jedoch der Mikrochip zur Antenne positioniert wird. Alternativ können die Antennenfolie auf das Substrat und anschließend die Ausgleichslage auf das Substrat positioniert sowie die beiden Schichten durch eine Heftung zum Substrat verbunden werden.

Eine weitere vorteilhafte Ausgestaltung des Verfahrens sieht vor, dass der als bare-die ausgebildete Mikrochip mit einem Flip-Chip-Klebeverfahren aufgebracht und mit den Anschlussenden der Antenne kontaktiert wird. Dieser Arbeitsschritt kann ebenfalls wiederum ohne mechanische Belastung des Substrats in der Ausgleichsschicht erfolgen.

Des Weiteren ist bevorzugt vorgesehen, dass die zumindest eine Windung zwischen den Anschlussenden der Antenne im Bereich des Mikrochips verjüngt ausgebildet und der Mikrochip die zumindest eine Windung überbrückend auf das Substrat aufgebracht wird. Dabei wird vor dem Aufbringen des Mikrochips auf die Anschlussenden der Antenne ein Chipkleber aufgetragen. Durch die anschließende Aufbringung des Mikrochips kann einerseits eine Kontaktierung mit den Anschlussenden der Antenne erfolgen und andererseits eine Einbettung der zumindest einen dazwischen angeordneten Windung in den Kleber sowie gleichzeitig eine Fixierung des Mikrochips zu den Kontaktstellen ermöglicht sein.

Eine weitere alternative Ausgestaltung sieht vor, dass ein Mikrochip mit einer Chipantenne auf das Substrat aufgebracht wird, welche mit einer auf das Substrat aufgebrachten Antenne kommuniziert. Dabei ist die bereits auf das Substrat aufgebrachte Antenne als verdruckte Antenne ausgebildet.

Eine weitere vorteilhafte Ausgestaltung des Verfahrens sieht vor, dass die Aussparung der Ausgleichslage durch Laserschneiden oder Stanzen eingebracht wird.

Die der Erfindung zugrunde liegende Aufgabe wird des Weiteren durch ein Verfahren zur Herstellung einer Chipkarte, die aus mehreren Schichten mit wenigstens einem Mikrochip und wenigstens einer Antenne besteht, gelöst, indem ein Halbzeug und zumindest eine Trägerschicht und/oder zumindest eine Folie zu einem Stapel übereinander gelegt werden und der Stapel in einem Laminationsschritt zu einem Kartenkörper laminiert wird. Dadurch bilden die einzelnen Schichten zusammen mit dem Halbzeug einen monolithischen Kartenkörper, so dass die einzelnen Schichten und/oder der Kartenkörper untrennbar miteinander verbunden sind. Darüber hinaus stellt dieser Laminationsschritt den einzigen Laminationsschritt dar, der zu einer fertigen Chipkarte führt, das heißt, dass eine minimale thermische Beanspruchung und/oder Vorschädigung des Trägermaterials und/oder den weiteren Komponenten des Kartenkörpers gegeben ist. Bei der Herstellung einer solchen Chipkarte wird somit kein Prelaminat eingesetzt, das heißt, dass eine Laminierung in den vorbereitenden Prozessschritten bis zum letzten Laminationsschritt bei dem erfindungsgemäßen Verfahren nicht stattfindet. Es wird also ein nicht laminiertes Halbzeug zur Herstellung der Chipkarte eingesetzt.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Schnittdarstellung eines ersten Arbeitsschrittes zur Herstellung eines Halbzeuges für eine Chipkarte,
Figur 2 schematische Ansichten einer Bestückung des Substrats mit einem Mikrochip,
Figur 3 schematische Ansichten zur Herstellung einer Aussparung in einer Ausgleichslage,
Figur 4 eine schematische Schnittansicht eines Halbzeuges,
Figur 5 eine schematische Ansicht von oben auf ein Halbzeug,
Figur 6 eine schematische Draufsicht eines Bogens mit Mehrfachnutzen und
Figur 7 eine schematische Schnittansicht eines Kartenkörpers einer Chipkarte.

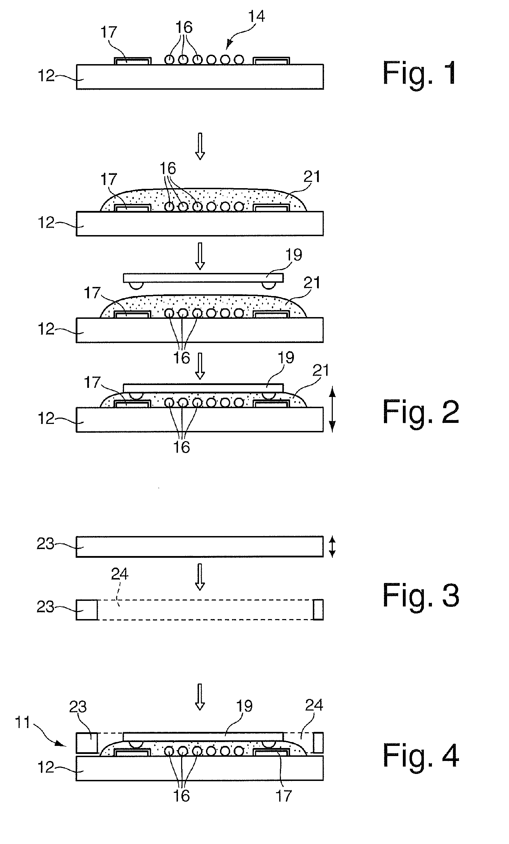

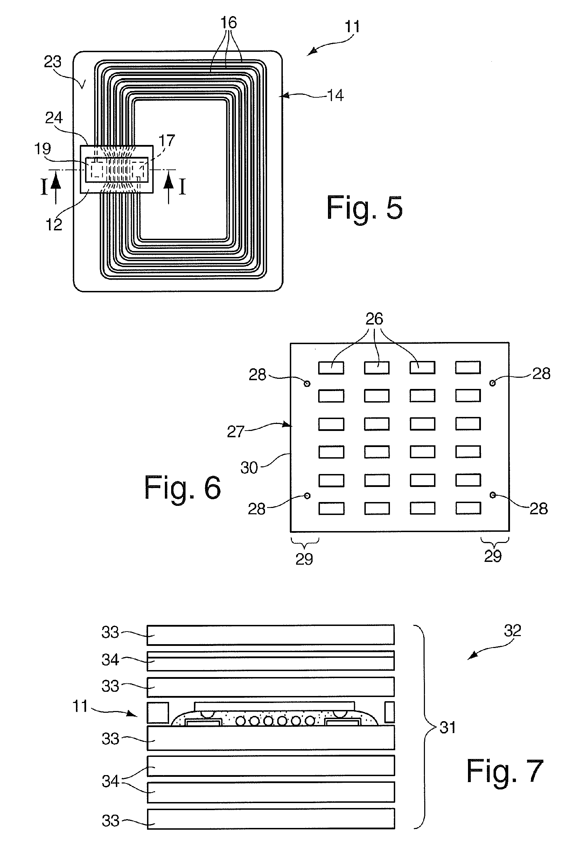

In Figur 1 ist ein erster Prozessschritt zur Herstellung eines in den Figuren 4 und 5 dargestellten Halbzeuges 11 zur Herstellung von Chipkarten dargestellt. Bei diesem ersten Prozessschritt wird auf ein Substrat 12 oder auf ein Trägermaterial eine Antenne 14 mit deren Windung oder Windungen 16 aufgebracht. Anschlussenden 17 der Windungen 16 auf dem Substrat 12 bilden gleichzeitig Kontaktstellen für einen nachfolgend darauf aufzubringenden Mikrochip 19, der beispielsweise in Figur 2 dargestellt ist.

Gemäß einer ersten Ausführungsform wird die Antenne durch einen Antennendruck hergestellt. Vorzugsweise wird per Siebdruck eine leitfähige Paste aufgebracht. Bei diesem Halbzeug 11 verlaufen die Windungen 16 zwischen den Anschlussenden 17, wie dies auch aus der Draufsicht gemäß Figur 5 hervorgeht. Bei dieser Anordnung sind die Windungen 16 bevorzugt zwischen den Anschlussenden 17 verjüngt ausgebildet. Ein solches Spulendesign ist insbesondere an den später aufzubringenden Mikrochip 19 angepasst, wie dies in Figur 2 dargestellt ist. Alternativ zur Aufbringung der Antenne 14 durch ein Druckverfahren können weitere alternative Verfahren, wie beispielsweise ein nasschemisches Verfahren, vorgesehen sein.

In Figur 2 ist ein nachfolgender Prozessschritt zur Bestückung des Substrates 12 mit dem Mikrochip 19 dargestellt. Zunächst wird ein Klebemittel 21 aufgebracht, welches die Anschlussenden 17 und die dazwischen liegenden Windungen 16 vollständig überdeckt. Darauffolgend wird mittels einer Flip-Chip-Klebetechnik der Mikrochip 19 aufgebracht, der bevorzugt als gedünnter und/oder ungehäuster und/oder flexibler Mikrochip ausgebildet ist. Die Kontaktstellen des Mikrochips 19 werden mit den Anschlussenden 17 der Antenne 14 kontaktiert. Gleichzeitig bildet der Mikrochip 19 eine Brücke, welcher die verjüngten Windungen 16 zwischen den Anschlussenden 17 überspannt. Der eine Brücke bildende Mikrochip 19 wird dabei durch das Klebemittel 21 gegenüber den Windungen 16 isoliert. Eine solche Anordnung weist eine Aufbauhöhe von weniger 300 µm, vorzugsweise weniger 200 µm, auf.

In Figur 3 ist schematisch die Herstellung einer Ausgleichslage 23 mit einer Aussparung 24 dargestellt, welche durch ein Laserschneiden oder ein Stanzen hergestellt ist. Dabei entspricht die Größe der Aussparung 24 einer Fläche, um den Mikrochip 19 darin aufzunehmen. Der Mikrochip 19 kann ohne Display oder gemäß einer bevorzugten Ausführungsform mit Display ausgebildet sein. Die Ausgleichslage 23 ist mit einer Dicke ausgebildet, welche einer Aufbauhöhe eines gedünnten und/oder ungehäusten und/oder flexiblen Mikrochips 19 entspricht, der mittels FlipChip-Technik auf die Anschlussenden 17 beziehungsweise Kontaktstellen der Antenne 14 aufgebracht ist. Beispielsweise kann eine Schichtdicke zwischen 50 µm und 100 µm vorgesehen sein.

Figur 4 zeigt einen schematischen Teilschnitt entlang der Linie I-I des in Figur 5 in der Draufsicht dargestellten Nutzens 26. In Figur 6 ist beispielhaft ein Bogen 27 mit einer Mehrzahl von Nutzen 26 gemäß Figur 5 dargestellt.

Nach dem Bestücken des Mikrochips 19 gemäß Figur 2 und der Herstellung einer Ausgleichslage 23 mit einer Aussparung 24 gemäß Figur 3 werden die Ausgleichslage 23 und das Substrat 12 derart zusammengeführt, dass die Aussparung 24 den Mikrochip 19 passergenau umgibt. Durch eine Heftung mit zumindest zwei Heftstellen 28 wird die Ausgleichslage 23 zum Substrat 12 temporär verbunden beziehungsweise zusammengeheftet. Bei dem in Figur 6 dargestellten Ausführungsbeispiel ist zumindest eine Heftstelle 28 im Randbereich 29 des Bogens 27 zwischen einem äußeren Rand 30 und einer diesem Rand 30 mit Abstand zugeordneten Spalte von Nutzen 26 vorgesehen. Bei einem Bogen 27 können beispielsweise nur zwei Heftstellen 28, also jeweils eine im äußeren Randbereich 29 vorgesehene Heftstelle 28, genügen, um die Ausgleichslage 23 zum Substrat 12 zu fixieren. Beispielhaft können auch vier Heftstellen 28 vorgesehen sein, also jeweils zwei Heftstellen 28 in jedem Randbereich 29, wie dies in Figur 6 dargestellt ist. In Abhängigkeit der Größe des Bogens 27 beziehungsweise des Materials kann die Anzahl der Heftstellen 28 gewählt werden. Bevorzugt ist vorgesehen, dass die Heftstellen 28 zwischen einem durch zwei Zeilen von Nutzen 26 gebildeten Flächenbereich liegen, der sich in den Randbereich 29 erstreckt und diesen kreuzt. Dadurch kann ein maximaler Abstand zu den jeweiligen Nutzen 26 eingehalten werden. Alternativ kann diese Heftstelle 28 auch auf der Höhe der Reihe der Nutzen 26 im Randbereich 29 liegen. Durch das Einbringen der vorzugsweise punktförmigen Heftstellen 28 kann die Ausgleichslage 23 vorfixiert und temporär zum Substrat 12 zusammengehalten werden, bis ein nachfolgender oder letzter Prozessschritt zur Herstellung des Halbzeugs 11 oder eines Kartenkörpers 31 durchgeführt wird.

Durch das Einbringen der Heftung ist eine minimale thermische und/oder mechanische Beanspruchung sowie Vorbeschädigung des Substrats 12 und der Ausgleichslage 23 gegeben.

In einzelnen Bereichen kann anstelle einer punktförmigen Heftstelle 28 auch eine streifen- oder linienförmige oder eine bereichsweise flächenförmige Heftstelle 28 vorgesehen sein. Insgesamt gesehen weisen die Heftstellen 28 eine Flächenausdehnung auf, die bevorzugt in einem Bereich zwischen 1 % und 10 % im Vergleich zur gesamten Flächenausdehnung des Substrats 12 beziehungsweise der Ausgleichslage 23 liegen, die vorzugsweise deckungsgleich übereinander angeordnet sind.

Die Heftstellen 28 werden beispielsweise durch ein Löten, Kleben, Ultraschall oder Schweißen erzeugt. Beispielsweise kann durch ein Laserpunkten eine Heftstelle 28 erzielt werden. Alternativ kann ein wärmereaktives Klebemittel zwischen den Schichten eine Klebeverbindung herstellen. Gegebenenfalls können auch zusätzlich in vorbestimmten Bereichen Klebepunkte gesetzt werden, um die Ausgleichslage 23 mit dem Substrat 12 durch eine Klebeverbindung zu fixieren. Darüber hinaus kann auch nur eine lokale Erwärmung ausreichen, um die Ausgleichslage 23 und das Substrat 12 miteinander zu verbinden und eine Heftstelle 28 zu bilden.

Zur Fertigstellung der Halbzeuge 11 werden die Nutzen 26 aus dem Bogen 27 ausgestanzt und können beispielsweise gestapelt für den nachfolgenden Bearbeitungsschritt gespeichert und bereitgestellt werden.

Solche Halbzeuge 11 sind somit ohne eine Lamination hergestellt. Diese eignen sich für eine sogenannte Inhouse-Produktion und zeichnen sich durch geringe Investitionskosten aus. Bei solchen Herstellungsverfahren für ein Halbzeug 11 ist ein Rolle-zu-Rolle-Prozess mit einem hohen Durchsatz möglich, das heißt, dass das Substrat 12 und die Ausgleichslage 23 als Bahnware anstelle von Bögen 27 bereitgestellt werden.

Zur Herstellung eines Kartenkörpers 31 für eine Chipkarte 32 gemäß Figur 7 werden das Halbzeug 11 und zumindest eine obere und untere Schicht 34 und/oder zumindest eine obere und/oder untere Folie 33 einander zugeordnet und übereinander gestapelt, um anschließend mittels nur einer Laminierung eine fertige Chipkarte 32 herzustellen, so dass in einem Prozessschritt während der Laminierung ein monolithischer Kartenkörper 31 hergestellt wird.

Bei der Herstellung eines solchen Kartenkörpers 11 werden bevorzugt alle Schichten 34 und/oder Folien 33 und das Substrat 12 sowie die Ausgleichslage 23 aus demselben Material, insbesondere Polycarbonat, hergestellt, so dass ein Monoblock entsteht. Alternativ können die zumindest eine Schicht 34 und/oder zumindest eine Folie 33 sowie das Substrat 12 und die Ausgleichslage 23 auch aus voneinander abweichenden Kunststoffmaterialien bestehen. Bei den weiteren Schichten kann es sich um Ausgleichslagen, Trägerschichten, Deck- oder Schutzschichten mit und ohne Sicherheitsmerkmale handeln. Die zumindest eine Folie 33 kann als Sicherheitsfolie oder weitere Ausgleichslage vorgesehen sein.

## Patentansprüche

1. Halbzeug zur Herstellung einer Chipkarte,
- mit einem Substrat (12), auf welchem eine Mehrzahl von Nutzen (26) vorgesehen sind, wobei jeder Nutzen (26) wenigstens eine Antenne (14) mit wenigstens einer Windung (16) und wenigstens ein Mikrochip (17) zur Kommunikation mit der Antenne (14) umfasst,
- mit einer Ausgleichslage (23), die wenigstens eine Aussparung (24) aufweist, in welcher der Mikrochip (17) angeordnet ist, wobei die Ausgleichslage (23) eine Dicke aufweist, die im Wesentlichen der Aufbauhöhe des Mikrochips (14) auf dem Substrat (12) entspricht,
- wobei das Substrat (12) und die Ausgleichslage (23) durch eine Heftung miteinander verbunden sind, und die Heftung zumindest zwei das Substrat (12) und die Ausgleichslage (23) miteinander verbindenden Heftstellen (28) umfasst, welche entfernt von der Mehrzahl der Nutzen (26) vorgesehen sind, **dadurch gekennzeichnet, dass** die Heftstellen (28) zwischen einer zum Rand (30) des Substrat (12) angrenzenden Spalte von Nutzen (26) und dem Rand (30) des Substrats (12) eingebracht sind.

2. Halbzeug nach Anspruch 1, **dadurch gekennzeichnet, dass** die Heftstellen (28) in einem zwischen zwei Zeilen von Nutzen (26) gebildeten Flächenbereich vorgesehen sind, der sich über die Breite des Substrats (12) erstreckt und den Randbereich (29) kreuzt.

3. Halbzeug nach Anspruch 1, **dadurch gekennzeichnet, dass** die Heftstellen (28) zum Verbinden des Substrates (12) und der Ausgleichslage (23) einen Flächenbereich umfassen, der weniger als 30 %, insbesondere weniger als 20 % und bevorzugt weniger als 10 %, gegenüber einem von der Antenne (14) umfassenden Flächenbereich beträgt.

4. Halbzeug nach Anspruch 1, **dadurch gekennzeichnet, dass** das Substrat (12) und/oder die Ausgleichslage (23) aus PC (Polycarbonat), PVC (Polyvinylchlorid), ABS (Acrylnitril-Butadien-Styrol), PET (Polyethylenterephthalat) hergestellt ist.

5. Halbzeug nach Anspruch 1, **dadurch gekennzeichnet, dass** zwischen Anschlussenden (17) der Antenne (14), die in der Aussparung (24) der Ausgleichslage (23) angeordnet sind, die zumindest eine Windung (16) der 56860p2_XML.doc Antenne (14) hindurchgeführt ist und dass der Mikrochip (17) als Brücke über die zumindest eine zwischen den Anschlussenden (17) hindurchgeführte Windung (16) positioniert und mit den Anschlussenden (17) kontaktiert ist.

6. Verfahren zur Herstellung eines Halbzeuges (11) nach einem der vorhergehenden Ansprüche für eine Chipkarte (32),
- bei dem auf das Substrat (12) wenigstens eine Antenne (14) aufgebracht wird,
- bei dem wenigstens ein Mikrochip (17) zur Kommunikation mit der zumindest einen Antenne (14) auf das Substrat (12) aufgebracht wird, wobei eine Mehrzahl von Nutzen (26) auf dem Substrat (12) ausgebildet werden,
- bei dem in einer Ausgleichslage (23) eine Aussparung (14) eingebracht wird und
- bei dem die Aussparung (24) der Ausgleichslage (23) zur Position des Mikrochips (19) ausgerichtet wird sowie das Substrat (12) und die Ausgleichslage (23) durch eine Heftung miteinander verbunden werden, die zumindest zwei Heftstellen (28) zur Heftung des Substrats (12) und der Ausgleichslage (23) entfernt von der Mehrzahl der Nutzen (26) umfasst, **dadurch gekennzeichnet, dass** die Heftstellen (28) zwischen einer zum Rand (30) des Substrat (12) angrenzenden Spalte von Nutzen (26) und dem Rand (30) des Substrats (12) eingebracht werden.

7. Verfahren nach Anspruch 6, **dadurch gekennzeichnet, dass** die Ausgleichslage (23) durch eine punkt, linien- oder streifenförmige Heftstellen (28) mit dem Substrat (12) verbunden wird oder dass das Substrat (12) und die Ausgleichslage (23) durch Löten, Schweißen, Kleben, insbesondere Heißkleben, oder mittels eines wärmereaktiven Klebemittels oder durch Laserpunkte geheftet werden.

8. Verfahren nach Anspruch 6, **dadurch gekennzeichnet, dass** eine Antennenfolie auf das Substrat (12) aufgebracht und vorzugsweise mit zumindest zwei Heftstellen (28) geheftet wird.

9. Verfahren nach Anspruch 6, **dadurch gekennzeichnet, dass** die zumindest eine Windung (16) der Antenne (14), welche zwischen den Anschlussenden (17) durchgeführt ist, verjüngt ausgebildet wird sowie der Mikrochip (19) die zumindest eine Windung (16) überbrückt und mit den Anschlussenden (17) der Antenne (14) kontaktiert wird.

10. Verfahren nach Anspruch 6, **dadurch gekennzeichnet, dass** die Aussparung (24) der Ausgleichslage (23) durch Laserschneiden oder Stanzen eingebracht wird.

11. Verfahren zur Herstellung einer Chipkarte (32), welche zumindest aus mehreren Schichten besteht, **dadurch gekennzeichnet,**
- **dass** zumindest ein Halbzeug (11) nach einem der Ansprüche 1 bis 5 und zumindest einer Schicht (34) und/oder zumindest einer weiteren Folie (33) zusammengeführt und übereinander zu einem Stapel positioniert werden und
- **dass** der Stapel durch einen Laminationsschritt zu einem Kartenkörper (31) verbunden wird.

## Claims

1. A semi-finished product for producing a smart card,
- having a substrate (12) on which a plurality of panels (26) is provided, each panel (26) comprising at least one antenna (14) with at least one winding (16), and at least one microchip (17) for communicating with said antenna (14),
- having a compensation layer (23) providing at least one recess (24) in which the microchip (17) is disposed, said compensation layer (23) having a thickness that corresponds essentially to the installation height of the microchip (14) on the substrate (12),
- said substrate (12) and said compensation layer (23) being interconnected through tacking and said tacking comprising at least two tacking locations (28) which interconnect the substrate (12) and the compensation layer (23) and which are provided at a distance from the plurality of panels (26),
**characterised in that** the tacking locations (28) are placed between a row of panels (26) situated adjacent to the edge (30) of the substrate (12) and said edge (30) of said substrate (12).

2. The semi-finished product as claimed in claim 1, **characterised in that** the tacking locations (28) are provided in a surface area formed between two lines of panels (26) which extends over the width of the substrate (12) and intersects the edge region (29).

3. The semi-finished product as claimed in claim 1, **characterised in that** the tacking locations (28) for connecting the substrate (12) and the compensation layer (23) comprise a surface area occupying less than 30 %, in particular less than 20 %, and preferably less than 10 % as compared to a surface area comprised by the antenna (14).

4. The semi-finished product as claimed in claim 1, **characterised in that** the substrate (12) and/or the compensation layer (23) is/are made from PC (polycarbonate), PVC (polyvinyl chloride), ABS (acrylonitrile butadiene styrene), PET (polyethylene terephthalate).

5. The semi-finished product as claimed in claim 1, **characterised in that** the at least one winding (16) of the antenna (14) passes through the space left between the connection ends (17) of the antenna (14) that are disposed in the recess (24) of the compensation layer (23), and **in that** the microchip (17) is positioned as a bridge spanning over the at least one winding (16) that passes through between the connection ends (17) and is brought into contact with said connection ends (17).

6. A method for producing a semi-finished product (11) as claimed in any of the preceding claims to be used in a smart card (32),
- wherein at least one antenna (14) is applied onto the substrate (12),
- wherein at least one microchip (17) for communicating with the at least one antenna (14) is applied onto the substrate (12), a plurality of panels (26) being formed on said substrate (12),
- wherein a recess (14) is formed in a compensation layer (23), and
- wherein the recess (24) of the compensation layer (23) is aligned with respect to the position of the microchip (19) and wherein the substrate (12) and the compensation layer (23) are interconnected by means of a tacking operation comprising at least two tacking locations (28) for tacking the substrate (12) and the compensation layer (23) at a distance from the plurality of the panels (26), **characterised in that** the tacking locations (28) are placed between a row of panels (26) situated adjacent to the edge (30) of the substrate (12) and said edge (30) of said substrate (12).

7. The method as claimed in claim 6, **characterised in that** the compensation layer (23) is connected to the substrate (12) by point-shaped, line-shaped or stripe-shaped locations of tack (28) or **in that** the substrate (12) and the compensation layer (23) are tacked together through soldering, welding, adhesive bonding, in particular heat-sealing, or by means of a heat-reactive adhesive or through laser points.

8. The method as claimed in claim 6, **characterised in that** an antenna foil is applied onto the substrate (12) and is tacked thereto by means of preferably at least two tacking locations (28).

9. The method as claimed in claim 6, **characterised in that** the at least one winding (16) of the antenna (14), which passes through between the connection ends (17), is tapered and **in that** the microchip (19) forms a bridge spanning over the at least one winding (16) and is brought into contact with the connection ends (17) of the antenna (14).

10. The method as claimed in claim 6, **characterised in that** the recess (24) of the compensation layer (23) is realised by means of laser cutting or die cutting.

11. The method for producing a smart card (32) which consists of at least a plurality of layers, **characterised in that**
- at least one semi-finished product (11) as claimed in any one of claims 1 to 5 and at least one layer (34) and/or at least one further foil (33) are joined together and positioned one above the other so as to form a pile, and
- the pile is formed into a card body (31) through a lamination step.

## Revendications

1. Semi-produit destiné à la fabrication d'une carte à puce,
- avec un substrat (12) sur lequel est prévue une pluralité de flans imprimés (26), chaque flan imprimé (26) comprenant au moins une antenne (14) pourvue d'au moins une spire (16) et au moins une puce (17) en vue de communiquer avec l'antenne (14),
- avec une couche de compensation (23) qui présente au moins un évidement (24) dans lequel est disposée la puce (17), la couche de compensation (23) présentant une épaisseur qui correspond essentiellement à la hauteur de montage de la puce (14) sur le substrat (12),
- le substrat (12) et la couche de compensation (23) étant unis l'un à l'autre par un pointage et le pointage comprenant au moins deux points de pointage (28) qui unissent l'un à l'autre le substrat (12) et la couche de compensation (23) et qui sont prévus à distance de la pluralité des flans imprimés (26),
**caractérisé en ce que** les points de pointage (28) sont réalisés entre une colonne de flans imprimés (26) contiguë au bord (30) du substrat (12) et le bord (30) du substrat (12).

2. Semi-produit selon la revendication 1, **caractérisé en ce que** les points de pointage (28) sont prévus dans une partie de surface formée entre deux rangées de flans imprimés (26) laquelle s'étend sur la largeur du substrat (12) et croise la partie périphérique (29).

3. Semi-produit selon la revendication 1, **caractérisé en ce que** les points de pointage (28) destinés à unir le substrat (12) et la couche de compensation (23) occupent une partie de surface comprenant moins de 30 %, en particulier moins de 20 % et de préférence moins de 10 %, d'une partie de surface occupée par l'antenne (14).

4. Semi-produit selon la revendication 1, **caractérisé en ce que** le substrat (12) et/ou la couche de compensation (23) sont fabriqués en PC (polycarbonate), PVC (chlorure de polyvinyle), ABS (acrylonitrile-butadiène-styrène), PET (polyéthylène-téréphtalate).

5. Semi-produit selon la revendication 1, **caractérisé en ce que** ladite au moins une spire (16) de l'antenne (14) passe entre des extrémités de connexion (17) de l'antenne (14) lesquelles sont disposées dans l'évidement (24) de la couche de compensation (23) et **en ce que** la puce (17) est positionnée en tant que pont enjambant ladite au moins une spire (16) qui passe entre les extrémités de connexion (17) et est mise en contact avec lesdites extrémités de connexion (17) .

6. Procédé destiné à la fabrication d'un semi-produit (11) selon l'une quelconque des revendications précédentes pour une carte à puce (32) lors duquel
- au moins une antenne (14) est appliquée sur le substrat (12),
- au moins une puce (17) est appliquée sur le substrat (12) en vue de communiquer avec ladite au moins une antenne (14), une pluralité de flans imprimés (26) étant alors formée sur le substrat (12),
- un évidement (14) est réalisé dans une couche de compensation (23) et
- l'évidement (24) de la couche de compensation (23) est orienté par rapport à la position de la puce (19) et le substrat (12) ainsi que la couche de compensation (23) sont unis l'un à l'autre par un pointage qui comprend au moins deux points de pointage (28) en vue de fixer par pointage le substrat (12) et la couche de compensation (23) à distance de la pluralité des flans imprimés (26), **caractérisé en ce que** les points de pointage (28) sont réalisés entre une colonne de flans imprimés (26) contiguë au bord (30) du substrat (12) et le bord (30) du substrat (12).

7. Procédé selon la revendication 6, **caractérisé en ce que** la couche de compensation (23) est unie au substrat (12) par un point de pointage (28) en forme de point, de ligne ou de bande ou **en ce que** le substrat (12) et la couche de compensation (23) sont pointés par brasage, soudage, collage, en particulier thermocollage, ou au moyen d'une substance adhésive thermoactive ou par points laser.

8. Procédé selon la revendication 6, **caractérisé en ce qu'**une feuille d'antenne est appliquée sur le substrat (12) et est fixée par pointage de préférence à l'aide d'au moins deux points de pointage (28).

9. Procédé selon la revendication 6, **caractérisé en ce que** ladite au moins une spire (16) de l'antenne (14) qui passe entre les extrémités de connexion (17) est réalisée de manière à aller en s'amincissant et **en ce que** la puce (19) enjambe ladite au moins une spire (16) et est mise en contact avec les extrémités de connexion (17) de l'antenne (14).

10. Procédé selon la revendication 6, **caractérisé en ce que** l'évidement (24) de la couche de compensation (23) est réalisé par découpe laser ou découpage.

11. Procédé destiné à la fabrication d'une carte à puce (32) qui est constituée au moins de plusieurs couches, **caractérisé en ce que**
- au moins un semi-produit (11) selon l'une quelconque des revendications 1 à 5 et au moins une couche (34) et/ou au moins une autre feuille (33) sont assemblés et positionnés les uns sur les autres pour former une pile et
- la pile est unie lors d'une étape de laminage pour former un corps de carte (31).
